# EUROPEAN PATENT SPECIFICATION

(11) **EP 1 955 625 B1**
(45) Date of publication and mention of the grant of the patent: **14.07.2010**
(21) Application number: 08156507.9
(22) Date of filing: 28.10.2004
(51) Int. Cl.: A47J 31/30

(54) **Equipment for the production of a hot beverage.**
Vorrichtung zur Herstellung eines Heißgetränkes
Équipement pour la production d'une boisson chaude

(43) Date of publication of application: 13.08.2008
(62) Divisional of application: 04791927.9
(73) Proprietor: BIALETTI INDUSTRIE S.P.A., 25030 Coccaglio (Brescia) (IT)
(72) Inventor: Ranzoni, Francesco, 25030, Coccaglio (Brescia) (IT)
(74) Representative: Pulieri, Gianluca Antonio

(56) References cited:
- EP-A- 1 208 781
- US-A- 5 970 850

## Description

. The object of the present invention is an equipment for the production of a hot beverage, particularly coffee, cappuccino and the like. An example of such equipment is disclosed in US-A-5970850.

**.** Particularly, the present invention relates to the field of equipment called moka and suitable to conventionally produce coffee or other types of hot beverages. With reference to the production of coffee, by moka is meant an equipment operating by heating an amount of water provided inside the boiler and delivering it under pressure in a collection container through a layer of powdered coffee.

. In other words, when the temperature increases, the pressure inside the boiler will increase until reaching a value at which the water contained therein will rise up to the upper container, passing through a layer of powdered coffee and extracting the aroma therefrom.

**.** Some known equipment is provided with a valve applied to the end of the delivery pipe of the collection container. A plug inside the valve closes the delivery pipe until a certain pressure is reached inside the boiler, which is greater than the delivery pressure when the valve is not provided. Some valves further provide means for immobilizing the plug in the open (raised) position to allow the delivery both of liquid and steam preferably through a conduit ending below the groundwater surface of the beverage, in order to obtain foamed beverages, for example cappuccino.

**.** The known equipment have some drawbacks that are mainly associated to the fact that the efficiency of the transformation of the energy accumulated in the boiler to the cinetic energy of the fluid rising up from the boiler to the collection container has never been deemed particularly important.

**.** In other words, the effect exerted by the kinetic energy value of the fluid being delivered on the organoleptic characteristics of the obtained beverage has never been taken into account.

. The Applicant has surprisingly found that a high kinetic energy of the fluid positively affects the organoleptic characteristics of the beverage. This effect is even more enhanced with those equipment provided with valves, such as described above, particularly in case of the production of cappuccino, because the turbulence generated in the milk is increased and consequently the foam obtained is more creamy, more uniform and more persistent.

. The problem at the heart of the present invention is that of having found a factor affecting the organoleptic characteristics of the beverage in the kinetic energy of the liquid being delivered and that of providing an equipment for the production of hot beverages having such structural and functional characteristics as to overcome the above drawbacks cited with reference to the prior art.

**.** Particularly, the problem at the heart of the present invention is to provide an equipment for the production of hot beverages allowing to obtain a high kinetic energy of the liquid being delivered.

. This problem is resolved by means of a bottom for an equipment for the production of hot beverages in accordance with claim 1. The dependent claims relate to further embodiments according to the present invention.

**.** Further characteristics and the advantages of the equipment according to the invention will be understood from the description below of preferred embodiments thereof, which are intended as being merely illustrative and non-limiting, with reference to the annexed drawings, in which:

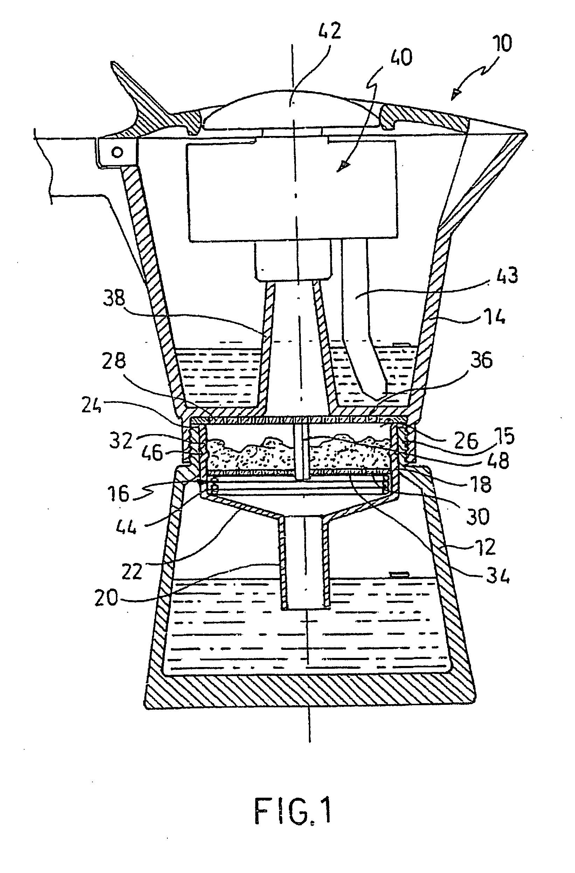

. Figure 1 illustrates a longitudinal sectional view of an equipment for the production of a hot beverage in accordance with the present invention;

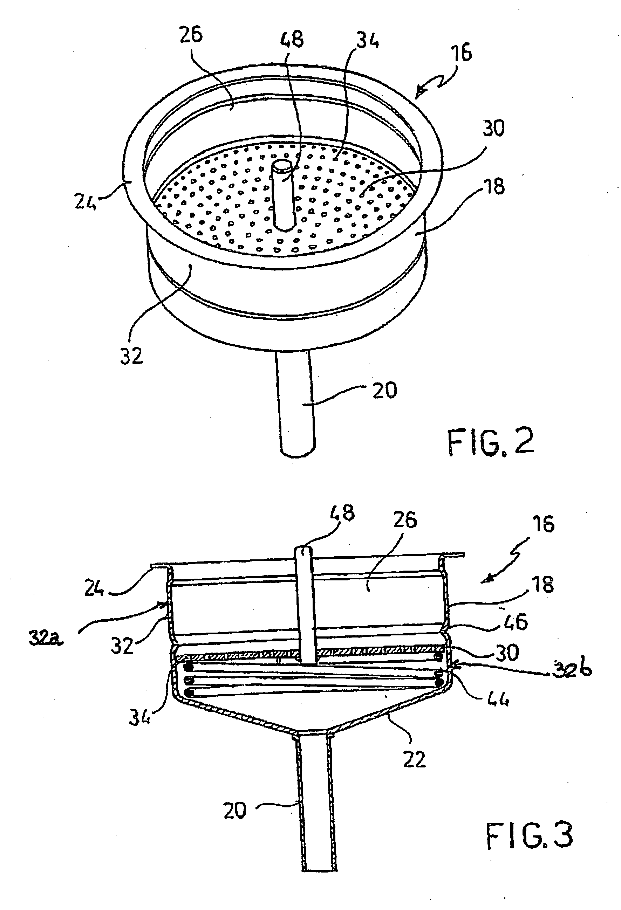

**.** Figure 2 illustrates a perspective view of a detail of the equipment from figure 1;

**.** Figure 3 illustrates a longitudinal sectional view of the detail from figure 2;

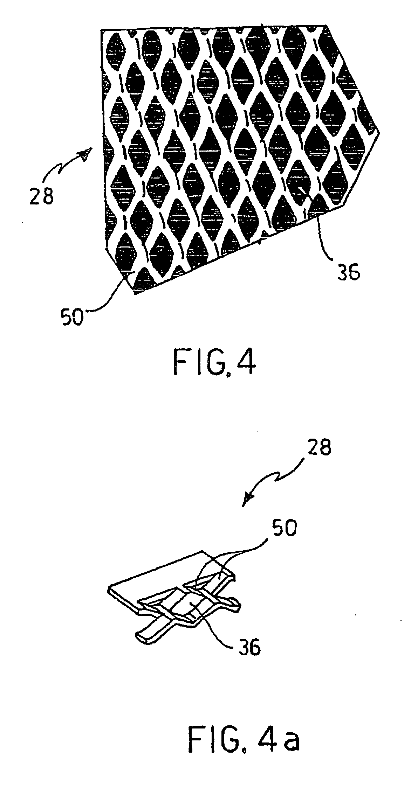

. Figure 4 illustrates an enlarged and negative view of a detail of the equipment from figure 1;

**.** Figure 4a illustrates an enlarged perspective view of a detail from figure 4.

**.** With reference to the above figures, with 10 has been generally designated an equipment for the production of a hot beverage. This equipment is generally known as a moka and is suitable to make various types of beverages, among which coffee and cappuccino.

**.** The equipment 10 comprises a boiler 12 and a collection container 14 being associated to the boiler. Conventionally, the collection container is screwed onto an open mouth 15 of boiler.

**.** The equipment 10 further comprises a container 16 for a powder or ground ingredient, for example coffee, being inserted in the boiler open mouth.

. The container 16 comprises a bowl 18 projecting below a blowpipe 20 for example joined to the bowl through a flared portion 22.

**.** In accordance with an embodiment, the container 16 further comprises an edge 24 suitable to be rested on the upper edge of the open mouth of boiler 12.

**.** In the assembled position of the equipment 10, the container 16 is inserted in the boiler such that the blowpipe 20 extends within the boiler. Furthermore, the collection container 14 is screwed to the boiler 12 above the container 16, such as for example illustrated in figure 1.

. With 26 there has been indicated a housing chamber for the powder or ground ingredient. This housing chamber is defined by container 16 that is inserted within the boiler open mouth, and a bottom 28 of the collection container 14.

. Particularly, the housing chamber 26 is defined by the bottom 28 of the collection container 14, by a bottom 30 of the bowl 18 and side walls 32 of the container 16 for the powdered or ground ingredient.

**.** In accordance with a possible embodiment, the bottom 30 of the bowl consists of a disk provided with a plurality of small holes 34.

**.** In accordance with a possible embodiment, the bottom 28 of the collection container is defined by a disk provided with a plurality of openings 36.

. In accordance with a possible embodiment, the container 16 for the powdered or ground ingredient, the housing chamber 26 and a delivery pipe 38 leading to the collection container 14 define means for defining a connection path from the boiler to the collection container. When the boiler is heated, a liquid being contained therein, generally water, rises up through said path to the collection container, passing through the powdered or ground ingredient and extracting the flavour therefrom.

. In accordance with a possible embodiment, the equipment 10 comprises a valve 40 being housed at the end of the delivery pipe 38. The valve 40 comprises a plug, not illustrated, suitable to close the delivery pipe 38 until reaching a certain pressure value within the boiler. In figure 1 there can be seen a plunger-shaped end 42 being connected to the plug and extending outside the valve body. This plunger-shaped end is also preferably a calibrated weight of the plug.

. When a certain pressure value is reached within the boiler, the plug will be raised and the liquid being contained in the boiler can quickly rise up to the collection container. Preferably, the plug moves along a vertical direction, within the valve body, between a closed (lowered) position and an open (raised) position.

. Preferably, the valve 40 comprises means, not illustrated, immobilizing the plug in the open position of the delivery pipe. Furthermore, the valve 40 can comprise at least one outlet conduit 43 leading to the collection container at a lower level than the outlet of the delivery pipe 38.

**.** The means defining a connection path from the boiler to the collection container comprise means for limiting the pressure drop experienced by the liquid contained in the boiler which, when the boiler is heated, rises up through the connecting path to the collection container.

**.** In accordance with a possible embodiment, the means for limiting pressure drop comprise means for increasing the volume of the housing chamber 26 between a volume at rest, corresponding to a non-assembled configuration of the equipment, and a working volume corresponding to the assembled configuration of the equipment.

. With reference to what has been described above, by assembled configuration of the equipment is meant the configuration in which the collection container 14 is screwed to the boiler 12 containing the container 16 for the powdered or ground ingredient (figure 1). On the other hand, by non-assembled configuration is meant the configuration in which the collection container is not screwed to the boiler. Preferably, reference is made to a non-assembled configuration in which the container 16 for the powdered or ground ingredient is either inserted in the boiler or free, such as illustrated in figures 2 and 3.

. In accordance with a possible embodiment, the working volume of the housing chamber 26 is about 15% greater than its volume at rest.

. In accordance with a possible embodiment, the bottom 30 of container 16 for the powdered or ground ingredient moves along the side walls 32 of the container between a rest position, corresponding to a non-assembled configuration of the equipment, and a working position, corresponding to an assembled configuration of the equipment.

**.** In normal usage of equipment 10, i.e. the equipment being placed on a horizontal plane, the bottom 30 moves along a vertical direction. Particularly, the bottom 30 moves between the rest position, in which the bottom is arranged at a certain height, and the working position, in which the bottom is arranged at a lower height than the rest position.

. In accordance with a possible embodiment, the container 16 for the powdered or ground ingredient comprises means for holding the bottom 30 in the rest position. Advantageously, these means comprise elastic means that are inserted between the bottom and bottom walls of the container, for example the flared portion 22. Preferably, the elastic means comrpise a helicoidal spring 44 internally and laterally placed at the side walls of container 16 for the powdered or ground ingredient.

**.** In accordance with a possible embodiment, the container 16 for the powdered or ground ingredient comprises means for defining the rest position of the bottom 30 thereof. Advantageously, these means comprise at least a projection from the side walls 32 extending inwards to the housing chamber 26. Preferably the projection is obtained by locally folding the side walls of the container 16 for the powdered or ground ingredient. In accordance with a possible embodiment, such as illustrated in the figures, the projection is an annular folding 46 of the side walls 32 of the housing chamber 26.

. In accordance with a possible embodiment, the equipment 10 comprises means for displacing the bottom 30 of container 16 from the rest position to the working position in the assembled configuration of the equipment. Advantageously, these means comprise at least one rigid element 48 being interposed between the moving bottom 30 of the container for the powdered or ground ingredient and the bottom 28 of the collection container 14. This rigid element has a length equal to the distance between the moving bottom 30, in the working position, and the bottom 28 of the collection container. This length is greater than the distance between the moving bottom 30, in the rest position, and the bottom 28 of the collection container.

**.** Preferably, the rigid element 48 is made as one piece with the moving bottom 30 and extends to the bottom 28 of the collection container 14. Still more preferably, the rigid element 48 extends centrally to the moving center 30.

**.** In accordance with a possible embodiment, in the rest position of the moving bottom 30 (figure 2 and 3) the rigid element 48 extends beyond the height of the side walls 32 of the container 16 to interfere with the bottom 28 of the collection container and push the moving bottom 30 downwards, at the assembled configuration of the equipment (figure 1).

**.** With particular reference to figure 3, the container 16 comprises side walls 32 having a greater height than the side walls of a container according to the prior art that is suitable for producing the same amount of beverage. In fact, a first portion 32a of the side walls 32 defines the volume of powdered or ground ingredient (for example coffee) suitable to the particular type of equipment, whereas a second portion 32b of the walls 32 defines the housing area of spring 44 and the movement area of the moving bottom 30.

**.** In accordance with the embodiment illustrated in the figures, the moving bottom 30 slides along the side walls 32 defining a guide and a containment element of the bottom.

**.** In accordance with the invention, the means for limiting the pressure drop comprise the bottom 28 of the collection container 14, wherein a plurality of openings 36 is provided in said bottom for the liquid to pass therethrough from the boiler to the collection container. These openings are configured and arranged such that the void/full ratio of bottom 28 is greter than 5%, preferably equal to 25%.

**.** Furthermore, in accordance with the invention, at least one of openings 36 is defined by a folded length 50 of the bottom 28 of the collection container, to increase the passage surface for the liquid contained in the boiler. In other words, the opening 36 has a passage section substantially transversal to the plane pathway of bottom 28.

. The operation of the equipment will be described below with reference to the same as being arranged for the production of cappuccino.

. The boiler 12 is filled with a certain amount of water and the container 16 is inserted within the open mouth of the boiler. A certain amount of coffee is prepared in the container 16, for example by filling the volume available with the bottom 30 being in the rest position. Subsequently, the collection container 14 is screwed to the boiler and at the same time the rigid element 48 interferes with the bottom 28 of the collection container by pushing the bottom 30 of the container 16 downwards (figure 1). A certain amount of milk is introduced in the collection container and the valve 40 is applied to the delivery pipe 38. The plug of valve 40 is set in the lowered (i.e. closed) position of the delivery pipe (figure 1). Subsequently, the boiler is conventionally heated until the pressure in the boiler exceeds a certain value corresponding to the pressure value at which the plug is raised. The latter is immobilised in the raised position such that both the water and the steam contained in the boiler are quickly released into the milk thereby generating a turbulence contributing to form the foam.

**.** Generally, the operation of an equipment of the type described above provides that, by heating the liquid contained in the boiler, the pressure and temperature values therein will until the accumulated energy turns into kinetic energy of the liquid flowing along the delivery path. Contrarily to what has been believed so far, it has been noted that a greater kinetic energy of the liquid corresponds to a beverage with improved organoleptic characteristics, particularly in the case where the beverage is cappuccino, as will be described below.

**.** The present invention allows to improve the efficiency of the transformation of the energy accumulated within the boiler, prior to delivery, to kinetic energy during the delivery, thereby improving the organoleptic properties of the beverage, the conditions reached within the boiler being equal.

**.** The present equipment, particularly when provided with valve 40, can be used for the production of coffee, with or without foam, or cappuccino.

. In the case where the valve 40 being equipped with means for immobilizing the plug in the open position is provided, selecting the position of the plug allows to select the type of beverage as desired. By arranging the plug in the lowered position in which it closes the outlet of the delivery pipe 38, the delivery of the liquid contained in the boiler takes place when the pressure inside the boiler has reached a threshold value capable of counteracting the plug and raise it to open the delivery pipe.

**.** In other words, the presence of the plug allows to store more energy inside the boiler and then to obtain more kinetic energy of the liquid being delivered. It has been surprisingly found that the efficiency of this transformation is even more important when the equipment is used for the production of cappuccino, using a valve 40 provided with means for immobilizing the plug in the raised (open) position of a conduit leading below the groundwater surface of the beverage contained in the collection container (figure 1).

. The more the energy accumulated in the boiler is effectively transformed in kinetic energy of the liquid/vapour contained in the boiler, the more the turbolence that may be generated in the milk is high, and so are the amount, persistence and consistency of the foam obtained.

**.** Particularly, due to the present invention, the liquid flowing through the connection path between the boiler and the collection container is subjected to limited pressure drop, therefore the energy accumulated in the boiler before the plug opens is effectively turned to kinetic energy.

. The liquid being delivered is subjected to a first pressure drop while flowing through the layer of powdered or ground ingredient (coffee). This is due both to the nature of this layer and the effect of the liquid. The pressure drop increases with the compactness level of the powdered ingredient that, besides depending on the characteristics of the powder and the pressure applied by the operator, increases when the powder is wet by the liquid rising up along the blowpipe 20 because the wet powdered layer expands.

**.** Due to the original provision of a housing chamber of a varying volume, the volume at rest, i.e. that being filled by the operator, is smaller than the working volume thereby leaving about 15% expansion volume for the powdered layer imbibed with liquid.

. However, this allows to provide a volume at rest corresponding to the volume of ingredient required for the volumetry of the equipment, such that the user is provided with a precise reference.

**.** Furthermore, the original provision of a bottom of the container having a high void/full ratio allows to further limit the pressure drop experienced by the liquid being delivered. The advantageous configuration of the openings 36 allows to considerably increase the void/full ratio.

. It is understood that variants and/or additions to what has been described and illustrated above can be provided.

. Alternatively to what has been illustrated in the drawings, the moving bottom can be that of the collection container or both.

. Furthermore, the rigid element can be fixed to the bottom of the collection container in all the possible embodiments thereof.

. The valve, if provided, can have various configurations, both of the valve body and the plug, as well as the means for immobilising the same, if provided.

. Alternatively to a moving bottom of the container for the powdered or ground ingredient, the means for limiting the pressure drop can comprise means defining a volume of the powdered or ground ingredient and a volume of the housing chamber in the assembled configuration of the equipment. The volume of the housing chamber is greater than the volume of the powdered or ground ingredient. For example, the container for the powdered or ground ingredient can be provided such as to define an increased volume of the housing chamber relative to the amount of powdered or ground ingredient required, a level reference for the ingredient being provided.

. The helicoidal spring 44 can be replaced with any means suitable to hold the bottom 30 in the rest position. For example, other types of elastic means or other arrangements of the same are possible.

. To the preferred embodiment of the equipment described above, those skilled in the art, aiming at satisfying contingent and specific requirements, will be able to carry out a number of modifications, adaptations and replacement of elements with others that are functionally equivalent, without however departing from the scope of the claims.

## Claims

1. A bottom (28) for a collection container (14) of an equipment (10) for the production of a hot beverage comprising a boiler (12), the collection container (14) being associated to the boiler (12) and means defining a connection path from the boiler (12) to the collection container (14),
wherein said means defining a collection path from the boiler (12) to the collection container (14) comprise means for limiting the pressure drop experienced by a liquid contained in the boiler (12) that, when the boiler is heated, rises up along said path to the collection container (14),
and wherein said bottom (28) comprises a plurality of openings (36) arranged and configured such that the void/full ratio is greater than 5%, **characterized in that** at least one of said openings (36) is defined by a folded length (50) of said bottom (28) in order to increase the passage surface for said liquid.

2. The bottom according to claim 1, wherein the openings (36) of said bottom of the collection container are arranged and configured such that the void/full ratio is about 25%.

3. Equipment (10) for the production of a hot beverage comprising a boiler (12), a collection container (14) being associated to the boiler (12) and means defining a connection path from the boiler (12) to the collection container (14), wherein said means defining a collection path from the boiler (12) to the collection container (14) comprise means for limiting the pressure drop experienced by a liquid contained in the boiler (12) that, when the boiler is heated, rises up along said path to the collection container (14),
said equipment further comprising a bottom (28) of the collection container (14) according to one of the preceding claims.

4. The equipment according to claim 3, further comprising a valve (40) being housed at the end of a delivery pipe (38) of said collection container (14), said valve (40) comprising a plug suitable to close said delivery pipe (38) until a certain pressure has been reached within the boiler (12).

## Patentansprüche

1. Boden (28) für einen Sammelbehälter (14) einer Ausrüstung (10) für die Herstellung eines Heißgetränks, die einen Boiler (12) umfasst, wobei der Sammelbehälter (14) mit dem Boiler (12) und Mitteln, die einen Verbindungsweg von dem Boiler (12) zu dem Sammelbehälter (14) definieren, verbunden ist,
wobei die Mittel, die einen Verbindungsweg von dem Boiler (12) zu dem Sammelbehälter (14) definieren, Mittel zur Begrenzung des Druckabfalls umfassen, welcher von einer in dem Boiler (12) enthaltenen Flüssigkeit durchgemacht wird, welcher, wenn der Boiler erhitzt wird, entlang des Wegs zu dem Sammelbehälter (14) zunimmt,
und wobei der Boden (28) eine Vielzahl von Öffnungen (36) umfasst, die derart angeordnet und aufgebaut sind, dass das Leerraum /Füllverhältnis größer als 5% ist, **dadurch gekennzeichnet, dass**
wenigstens eine der Öffnungen (36) durch eine gefaltete Länge (50) des Bodens (28) definiert ist, um die Durchgangsoberfläche für die Flüssigkeit zu vergrößern.

2. Boden nach Anspruch 1, wobei die Öffnungen (36) des Bodens des Sammelbehälters derart angeordnet und aufgebaut sind, dass das Leerraum /Füllverhältnis etwa 25% ist.

3. Ausrüstung (10) für die Herstellung eines Heißgetränks, die einen Boiler (12), einen mit dem Boiler (12) verbundenen Sammelbehälter (14) und Mittel, die einen Verbindungsweg von dem Boiler (12) zu dem Sammelbehälter (14) definieren, umfasst, wobei die Mittel, die einen Sammelweg von dem Boiler (12) zu dem Sammelbehälter (14) definieren, Mittel zur Begrenzung des Druckabfalls umfassen, welcher von einer in dem Boiler (12) enthaltenen Flüssigkeit durchgemacht wird, welcher, wenn der Boiler erhitzt wird, entlang des Wegs zu dem Sammelbehälter (14) zunimmt,
wobei die Ausrüstung ferner einen Boden (28) des Sammelbehälters (14) nach einem der vorhergehenden Ansprüche umfasst.

4. Ausrüstung nach Anspruch 3, die ferner ein Ventil (40) umfasst, das an dem Ende eines Ablaufrohrs (38) des Sammelbehälters (14) untergebracht ist, wobei das Ventil (40) einen Ventilstöpsel umfasst, der geeignet ist, das Ablaufrohr (38) zu verschließen, bis ein gewisser Druck innerhalb des Boilers (12) erreicht wurde.

## Revendications

1. Fond (28) pour récipient collecteur (14) d'un équipement (10) destiné à la production d'une boisson chaude, comprenant une bouilloire (12), le récipient collecteur (14) qui est associé à la bouilloire (12) et des moyens définissant un trajet de raccordement de la bouilloire (12) au récipient collecteur (14),
dans lequel lesdits moyens définissant un trajet collecteur de la bouilloire (12) au récipient collecteur (14) comprennent des moyens pour limiter la chute de pression subie par un liquide contenu dans la bouilloire (12) qui, lorsque la bouilloire est chauffée, s'élève le long dudit trajet jusqu'au récipient collecteur (14), et dans lequel ledit fond (28) comprend une pluralité d'ouvertures (36) ménagées et configurées de sorte que le rapport vide/plein soit supérieur à 5 %, **caractérisé en ce que**
au moins une desdites ouvertures (36) est définie par une longueur plissée (50) dudit fond (28) afin d'augmenter la surface de passage pour ledit liquide.

2. Fond selon la revendication 1, dans lequel les ouvertures (36) dudit fond du récipient collecteur sont ménagées et configurées de sorte que le rapport vide/plein soit d'environ 25 %.

3. Equipement (10) pour la production d'une boisson chaude, comprenant une bouilloire (12), un récipient collecteur (14) qui est associé à la bouilloire (12) et des moyens définissant un trajet de raccordement de la bouilloire (12) au récipient collecteur (14), dans lequel lesdits moyens définissant un trajet collecteur de la bouilloire (12) au récipient collecteur (14) comprennent des moyens pour limiter la chute de pression subie par un liquide contenu dans la bouilloire (12) qui, lorsque la bouilloire est chauffée, s'élève le long dudit trajet jusqu'au récipient collecteur (14),
ledit équipement comprenant en outre un fond (28) du récipient collecteur (14) selon l'une quelconque des revendications précédentes.

4. Equipement selon la revendication 3, comprenant en outre une soupape (40) qui est logée à l'extrémité d'un tube délivreur (3a) dudit récipient collecteur (14), ladite soupape (40) comprenant un obturateur approprié pour fermer ledit tube délivreur (38) jusqu'à ce qu'une certaine pression soit atteinte dans la bouilloire (12).
